Europäisches Patentamt

(19) European Patent Office

Office européen des brevets

(11) Publication number: **0 194 537**
**A2**

## (12) EUROPEAN PATENT APPLICATION

(21) Application number: **86102694.6**

(22) Date of filing: **01.03.86**

(51) Int. Cl.⁴: **G 06 K 15/00**

(30) Priority: **11.03.85 US 710137**

(43) Date of publication of application:
**17.09.86 Bulletin 86/38**

(84) Designated Contracting States:
**BE CH DE FR GB IT LI NL SE**

(71) Applicant: **THOMAS & BETTS CORPORATION**
**920 Route 202**
**Raritan New Jersey 08869(US)**

(72) Inventor: **Peterpaul, Joseph**
**44 Fairway Avenue**
**West Orange Essex New Jersey(US)**

(74) Representative: **Berkenfeld, Helmut, Dipl.-Ing.**
**An der Schanz 2**
**D-5000 Köln 60(DE)**

(54) Apparatus and system for producing wire markers.

(57) Apparatus and system are disclosed for the printing of wire markers, inclusive of a keyboard for the input of operator information indicative of alphanumeric content, column format and selective permutation characteristics of wire markers. A display provides for visual presentation to the operator of operator-selected wire marker content, format and prompt information with respect to the selective permutation characteristics. A printer is responsive to operator key input for the printing of wire markers with such content in such format and with the selected permutation characteristics. A controller is connected to the foregoing units for effecting the printing of plural diverse wire markers responsively to a operator printing input. Extended controller operating programs are disclosed for producing any desired quantities of markers in any one of a variety of column and spacing formats and for automatically sequencing the numeric content of the markers.

FIG. 2

APPARATUS AND SYSTEM FOR PRODUCING WIRE MARKERS

FIELD OF THE INVENTION

This invention relates to wire markers for identifying discrete electrical conductors and pertains more particularly to improved apparatus and system for producing wire markers in diverse formats and in sequence without need for continued operator attention.

BACKGROUND OF THE INVENTION

Various apparatus is presently commercially available for the production of adhesively backed strips of tape bearing identification, through alphanumeric indicia, uniquely identifying the ends of conductors of a multiconductor cable harness for facilitating precise connection of conductors thereof to user apparatus. In one version of such apparatus, made commercially available by the assignee hereof, a commercially available calculator is modified such that keyboard entries therein give rise to permanent impressions through the calculator printer on wire marking substrates fed thereto as printing tape.

In use of the reference apparatus, an operator enters alphanumeric data into the keyboard, along with format
information with respect to the number of columns of data
desired in the marker and then simply prints the entered
information on the printing substrate by operation of the
printing key.

Continuous operator input is required in the
referenced apparatus for the production of wire markers in
plural number having respective diverse indicia. While the
idenfified commercial device has found acceptance in the
marketplace, its requirement for continuous operator input
has rendered same less than desirably effective.

SUMMARY OF THE INVENTION

The present invention has, as its primary object the
provision of improved wire marker production apparatus and
system.

A more particular object of the invention is the
provision of apparatus and system for the production of
wire markers of diverse indicia content with heightened
operator-unattended production thereof.

In the attainment of the foregoing and other objects,
the invention provides apparatus for the printing of wire
markers inclusive of keyboard means for the input of
operator information indicative of alphanumeric content, column format and selective permutation characteristics of wire markers, display means for visual presentation to the operator of operator-selected wire marker content, format and prompt information with respect to the selective permutation characteristics, printer means responsive to operator key input for the printing of wire markers with such content in such format and with the selected permutation characteristics, and controller means connected to the foregoing units for effecting the printing of plural diverse wire markers responsively to a operator printing input.

The foregoing and other objects and features of the invention will be further understood from the following detailed discussion of preferred embodiments and practices in accordance with the invention and from the drawings wherein like reference numerals identify like parts throughout.

DESCRIPTION OF THE DRAWINGS

Fig 1. is a plan elevational view of wire marker apparatus in accordance with the invention.

Fig. 2 is a system block diagram of apparatus in accordance with the invention.

Fig. 3 is a general flow chart of practice in accordance with the invention.

Fig. 4 is a flow chart indicative of the preferred keyboard routine of the invention.

Fig. 5 is a flow chart indicative of the preferred print routine of the invention.

Fig. 6 is a flow chart particularizing the steps of the automated sequencing routine of the invention.

Fig. 7 is a flow chart showing the steps of a sequence table search practice of the invention.

DESCRIPTION OF PREFERRED EMBODIMENTS AND PRACTICES

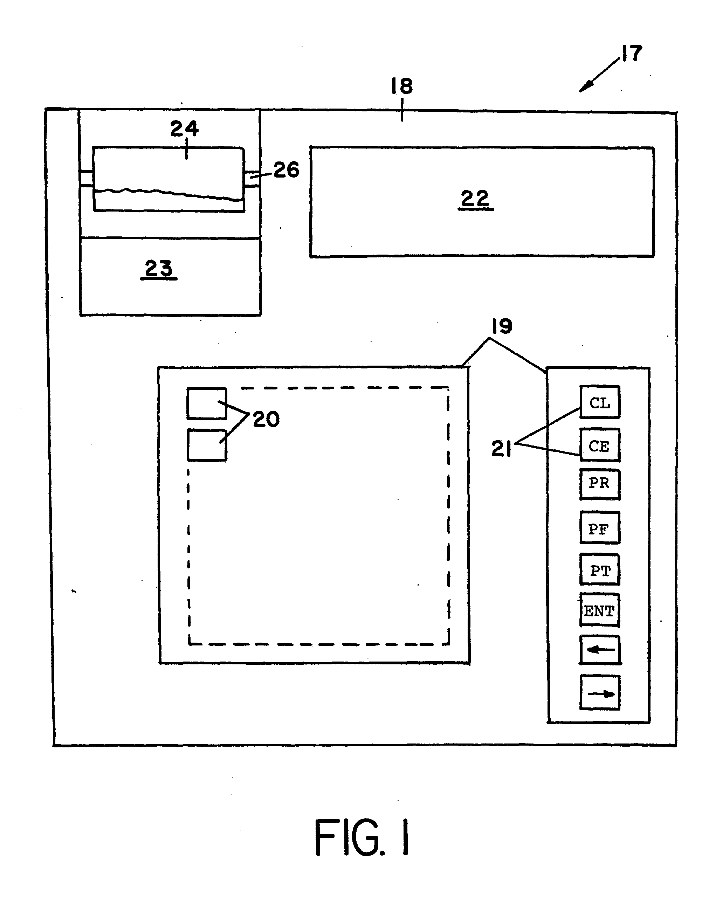

Referring to Fig. 1, wire marker apparatus 17 in acordance with the invention comprises a portable, self-powered console unit 18 containing a keyboard 19, inclusive of character keys 20 in a plurality which may contain both alphabetic and numeric (alphanumeric) keys and function keys 21 in a plurality which may include clear keyboard key CL, clear entry key CE, program select key PR, paper feed key PF, print key PT, a cursor left movement key and a cursor right movement key.

Display 22 may be an LCD (liquid crystal display) unit and provides communication as between an operator and apparatus 17 as to character entries, spacing and function entries, prompts and responses by the operator.

Printer 23 may be a typical dot-matrix printer and its output impressions are applied to wire marker tape 24, which is fed from its spool 26 by a suitable drive motor (not shown).

In use of the Fig. 1 apparatus, as will be more fully understood from the discussion below of the program implemented by the microprocessor chip controller of the apparatus responsively to operator keyboard input, the operator first outlines the marker printing project at hand. The project will, within the capabilities of the apparatus of the invention, call for identification of the number of columns of data to be presented on the marker (COLUMN SELECT), the number of markers to be produced or printed (QUANTITY SELECT), the number of printed lines per marker (PRINTED LINES SELECT), the number of unprinted lines per marker (UNPRINTED LINES SELECT), and the sequencing procedure (AUTO-SEQUENCE OR NOT) to be applied in marker production or printing. The operator will also have at hand the character information for the initial wire marker to be printed.

By way of example of system configuration and operator performance, an operator may opt for any one of the following: COLUMN SELECT- one column, two columns, three columns or four columns; QUANTITY SELECT- any number of markers may be printed; PRINTED LINES SELECT- typically, the marker has eight lines, any number may be selected for printing; UNPRINTED LINES SELECT- given the marker length, unprinted lines are selected in number equal to the difference between the printed lines selected and the marker length; and AUTO SEQUENCE OR NOT. Typically, for printing of diverse marker content, auto-sequence is selected, whereby a given digit of each column of data is to be advanced sequentially per printed marker.

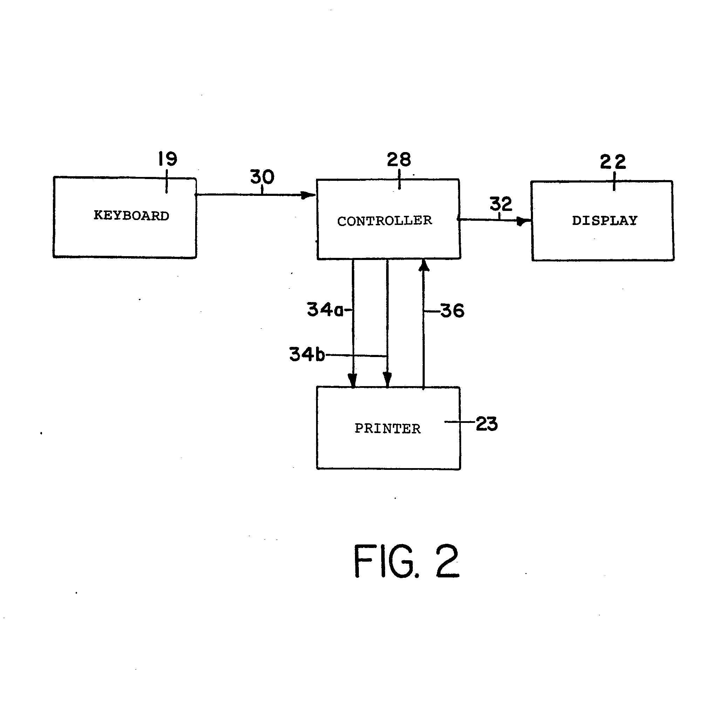

Referring now to Fig. 2, the system underlying the wire marker apparatus of Fig. 1 is shown in block diagram form and includes keyboard 19, display 22, printer 23 and controller 28, which may be a suitably programmed microprocessor of current chip variety. The keyboard furnishes output signals indicative of key selection to controller 28 on line 30 and the controller furnishes various prompt and other information to display 22 over line 32. Controller 28 applies motor control signals to line 34a and printing intelligence signals to line 34b, both of which are connected to printer 23 for operation thereof. Printer status is made known to controller 28 over printer output line 36.

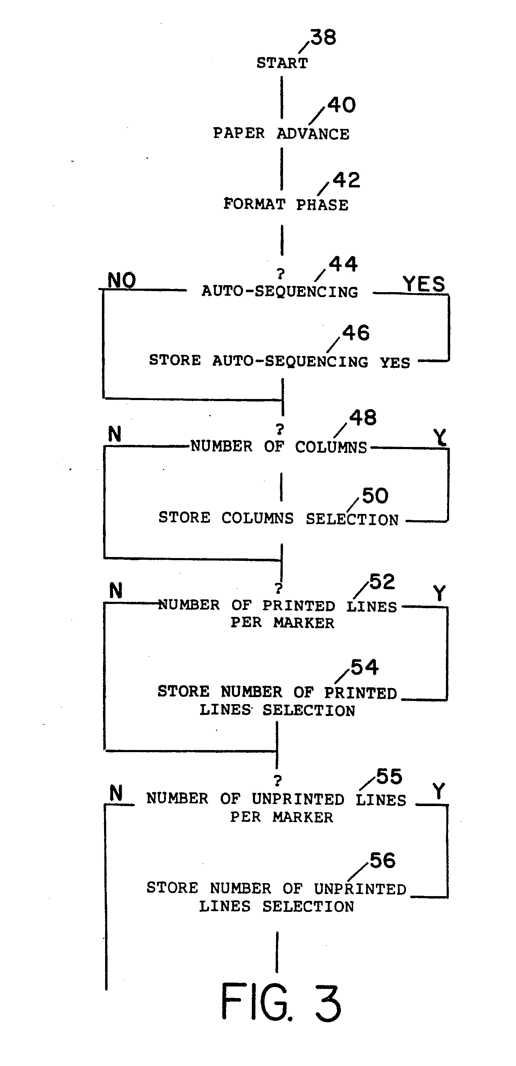

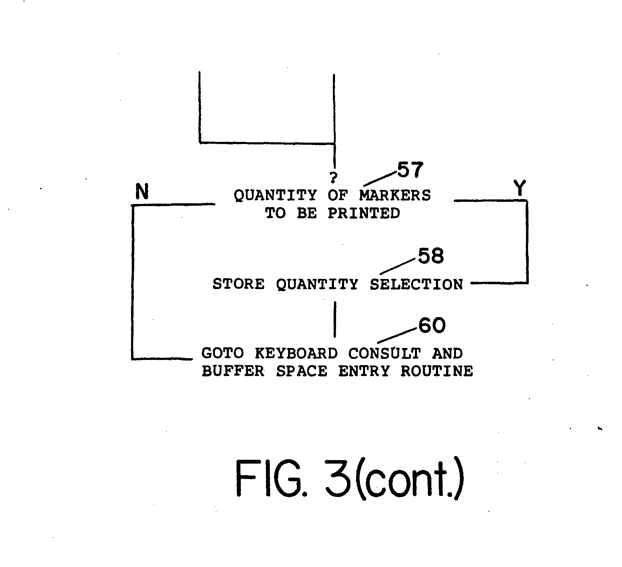

The overall program for operation of apparatus 17 is depicted in the flow chart of Fig. 3, to which reference is now had. Operation commences at -START- (step 38) and a wire marker spool is placed in apparatus 10 and by step 40, -PAPER ADVANCE-, is advanced into position for printing thereon.   In step 42, -FORMAT PHASE-, the program enters the function selection and setup activity.  This is brought on by operator depression of the program key PR, which now multiplexes certain keys of the alphanumeric keyboard.  By way of example, keys A, C, L, Q and S are selected to provide their alphabetic information to controller 28 in the absence of preceding operation of the program key, but when operated sequentially to operation of the program key, to bring on auto-sequencing (A key), column selection (C key), printed line select (L key), quantity select (Q key) and unprinted line select (S key).

In step 44, -? AUTO-SEQUENCING, controller 28 inquires as to whether the A key was operated following depression of the program key.  If the inquiry is answered in the affirmative, indication of same is stored in step 46, -STORE AUTO-SEQUENCING YES-. If negative reply, the program steps directly to step 48, bypassing step 46.  In step 48,

-? NUMBER OF COLUMNS-, which is also reached from step 46, the controller inquires as to whether the C key was operated successively to depression of the program key.  If positive answer, a prompt is given to the operator as to entry of the selection number (one, two, three or four), and the selection is stored in step 50, -STORE COLUMNS SELECTION-.  The program advances directly to step 52, -?

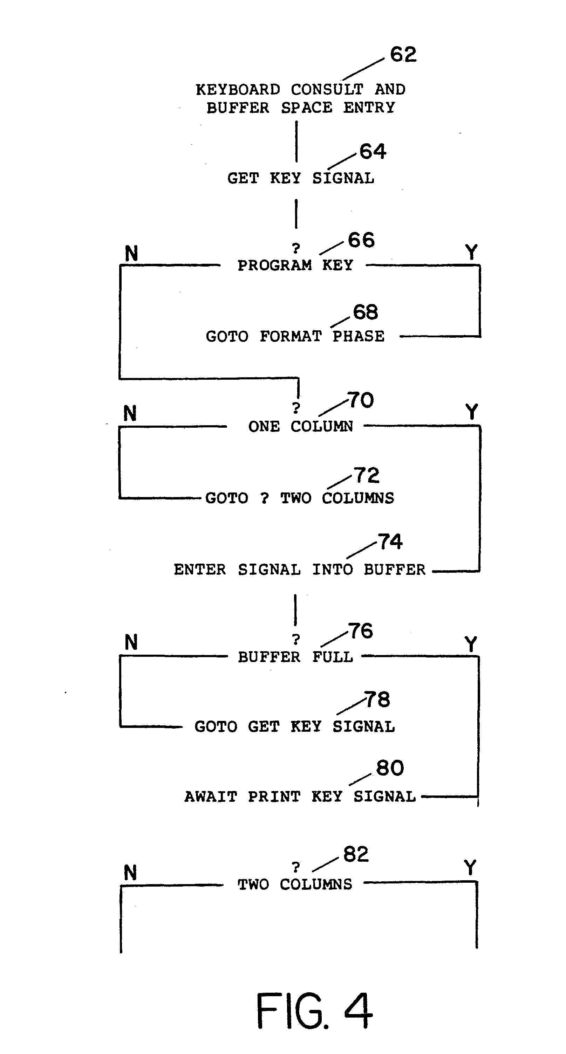

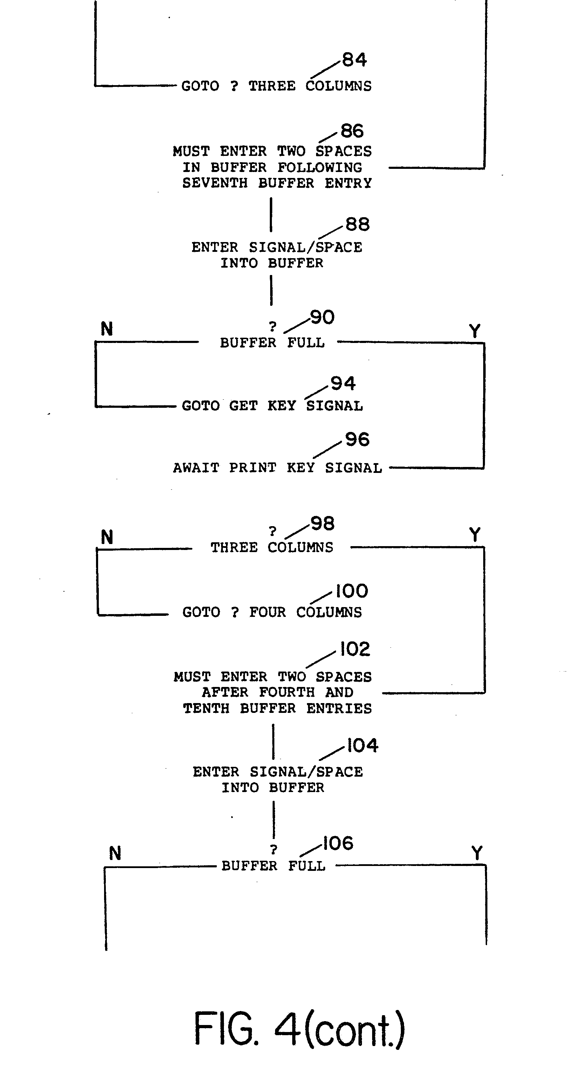

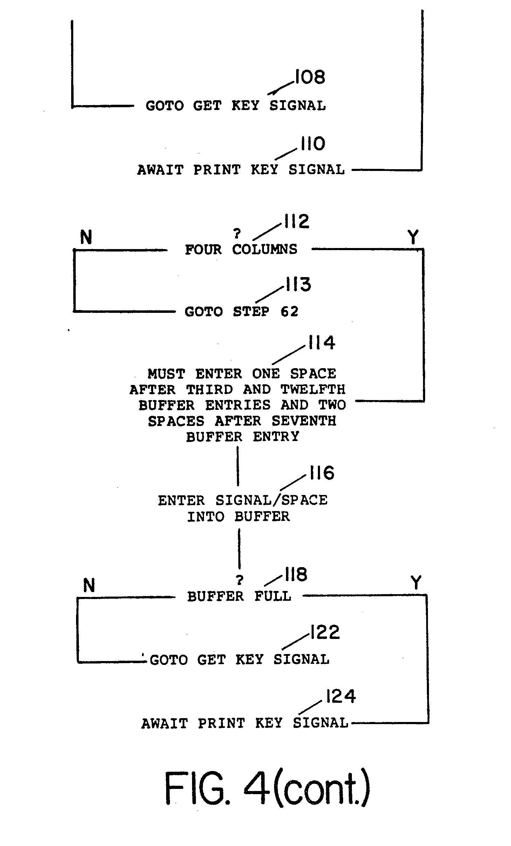

NUMBER OF PRINTED LINES PER MARKER.  Inquiry is made in
step 52 as to whether the L key was operated in sequence to
depression of the program key.  If so, the controller
prompts the operator as to entry of his selection and
stores same in step 54, -STORE NUMBER OF PRINTED LINES
SELECTION-.  If the answer to step 52 is negative, advance
is made to step 55, -? NUMBER OF UNPRINTED LINES PER
MARKER.  Inquiry is made in step 55 as to whether the S key
was operated in sequence to depression of the program key.
If so, the controller prompts the operator as to entry of
his selection and stores same in step 56, -STORE NUMBER OF
UNPRINTED LINES SELECTION-.  If the reply to the step 55
inquiry is negative, the program advances directly to step
57, - ? QUANTITY OF MARKERS TO BE PRINTED-.  Inquiry is
made in step 57 as to whether the Q key was operated in
sequence to depression of the program key.  If so, the
controller prompts the operator as to entry of his
selection and stores same in step 58, -QUANTITY OF MARKERS
TO BE PRINTED-.  If the answer to step 57 is negative, the
program advances directly to step 60, -GOTO KEYBOARD
CONSULT AND BUFFER SPACE ENTRY ROUTINE, which is set forth
in Fig. 4. Discussion preliminary to coverage of this
routine is now set forth.

     Table 1 below indicates an example of a character
buffer in accordance with the invention and the space (blank) entries per wire markers of the several varieties above noted, i. e., of one, two, three or four column type. The numerals 1 through 16 identify character/space positions in the character buffer.  Letters X and O represent respective character and space entries.

TABLE 1

CHARACTER BUFFER

1  2  3  4  5  6  7  8  9  10 11 12 13 14 15 16

ONE COLUMN MARKER

X  X  X  X  X  X  X  X  X  X  X  X  X  X  X  X

TWO COLUMN MARKER

X  X  X  X  X  X  X  O  O  X  X  X  X  X  X  X

THREE COLUMN MARKER

X  X  X  X  O  O  X  X  X  X  O  O  X  X  X  X

FOUR COLUMN MARKER

X  X  X  O  X  X  X  O  O  X  X  X  O  X  X  X

Referring to Fig.4, step 62 calls for an entry into
-KEYBOARD CONSULT AND BUFFER SPACE ENTRY ROUTINE-.  In step
64, -GET KEY SIGNAL-, controller 28 scans the keyboard for
an entry.  Controller 28 inquires as to whether the key
signal obtained is a program key in step 66, -? PROGRAM
KEY-.  If the inquiry is affirmatively answered, the
program directs activity to the format phase in step 68,
-GOTO FORMAT PHASE-. On negative reply to the step 66
inquiry, step 70, -? ONE COLUMN, is practiced, asking
whether the stored column selection is one column.  Upon
negative reply to the step 70 inquiry, the program advances
to step 72, -GOTO ? TWO COLUMNS, requiring further inquiry
prior to character buffer entry.

If the answer to the step 70 inquiry is affirmative,
i. e., that the stored column selection is a single column,
the program moves to step 74, -ENTER SIGNAL INTO BUFFER-.
Inquiry is now made in step 76 as to whether the character
buffer is complete in entry, -? BUFFER FULL.  If this
inquiry is answered in the negative, the program proceeds
to step 78, -GOTO GET KEY SIGNAL-, in its continuance of
character buffer loading.  If the inquiry is answered in
the positive, the program proceeds to step 80, -AWAIT PRINT
KEY SIGNAL-.

In the event that the stored column selection was not one column in the step 70 inquiry, the program proceeds through step 72 to the inquiry of step 82, -? TWO COLUMNS-.

If the answer to this inquiry is negative, i. e., that stored column selection is three or even four columns, the program steps to step 84, -GOTO ? THREE COLUMNS-. On positive answer to the step 82 inquiry, advance is made to step 86, -MUST ENTER TWO SPACES IN BUFFER FOLLOWING SEVENTH BUFFER ENTRY. This accommodates the spacing requirement for two column markers in Table 1 above, per step 88, -ENTER SIGNAL/SPACE INTO BUFFER-. Step 90 inquires as to buffer content, -? BUFFER FULL-, and negative answer calls for step 94, -GOTO GET KEY SIGNAL. If the answer is positive, the program advances to step 96, -AWAIT PRINT KEY SIGNAL.

In the event that the stored column selection was not two columns, the program proceeds, to the inquiry of step 98, -? THREE COLUMNS-. If the answer to this inquiry is negative, i. e., that stored column selection is four columns, the program steps to step 100, -GOTO ? FOUR COLUMNS-. On positive answer to the step 98 inquiry, advance is made to step 102, -MUST ENTER TWO SPACES AFTER FOURTH AND TENTH BUFFER ENTRIES. This accommodates the spacing requirement for three column markers in Table 1 above, per step 104, -ENTER SIGNAL/SPACE INTO BUFFER-. Step 106 inquires as to buffer content, -? BUFFER FULL-, and negative answer calls for step 108, -GOTO GET KEY SIGNAL.
If the answer is positive, the program advances to step 110
-AWAIT PRINT KEY SIGNAL.

In the event that the stored column selection was not
three columns, the program proceeds to the inquiry of step
112, -? FOUR COLUMNS-.  If the answer to this inquiry is
negative, a return is made in step 113 to step 62.  On
positive answer to the step 112 inquiry, advance is made to
step 114, -MUST ENTER ONE SPACE AFTER THIRD AND TWELFTH
BUFFER ENTRIES AND TWO SPACES AFTER SEVENTH BUFFER ENTRY.
This accommodates the spacing requirement for four column
markers in Table 1 above, per step 116, -ENTER SIGNAL/SPACE
INTO BUFFER-. Step 118 inquires as to buffer content, -?
BUFFER FULL-, and negative answer calls for step 122, -GOTO
GET KEY SIGNAL.  If the answer is positive, the program
advances to step 124, -AWAIT PRINT KEY SIGNAL.

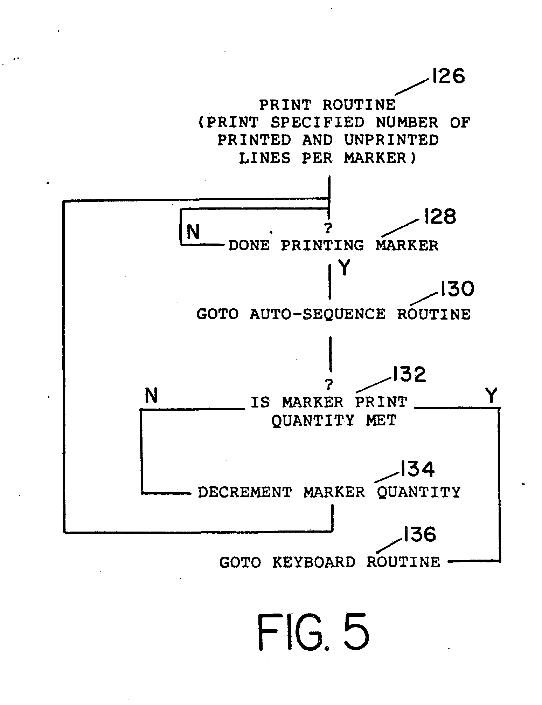

Turning now to Fig.5, operation of the print key
brings on step 126, -PRINT ROUTINE (PRINT SPECIFIED NUMBER
OF PRINTED AND UNPRINTED LINES PER MARKER)-, and entry into
the marker printing phase.  Initial inquiry is made as to
whether the system has completed printing of the past
marker in step 128, -? DONE PRINTING MARKER-.  If the
inquiry is answered in the negative, cycling takes place in
step 128.  Otherwise, the program proceeds to step 130,
-GOTO AUTO-SEQUENCE ROUTINE-.  An outset inquiry in that routine, covered below, is as to whether auto-sequencing has been selected.  Assuming the negative, or completion of auto-sequencing, practice then proceeds to step 132, -? IS MARKER PRINT QUANTITY MET-.  If negative, practice advances to step 134, -DECREMENT MARKER QUANTITY-, and return is had

to step 128 above.  If the answer is positive, the program advances to step 136, -GOTO KEYBOARD ROUTINE

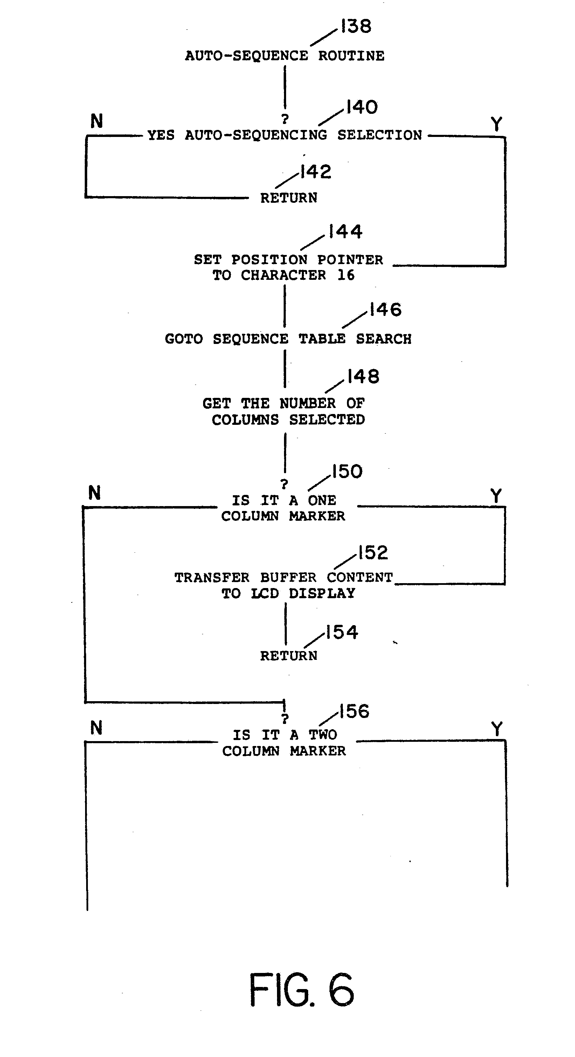

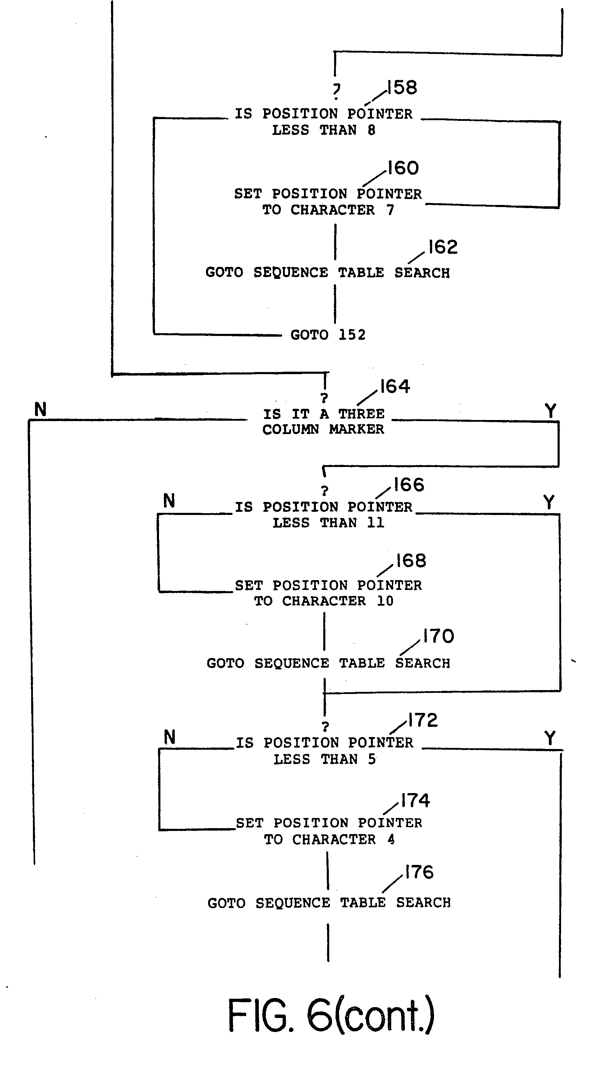

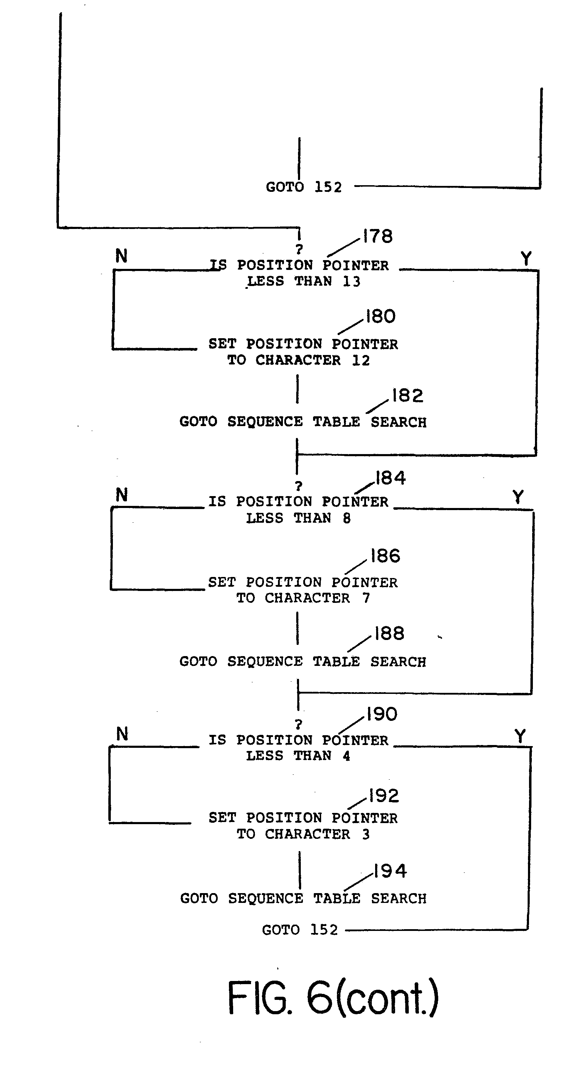

     The auto-sequencing routine is shown in Fig. 6, and is entered in step 138, AUTO-SEQUENCE ROUTINE.  The outset inquiry, above-referred to, is set forth in step 140, -?

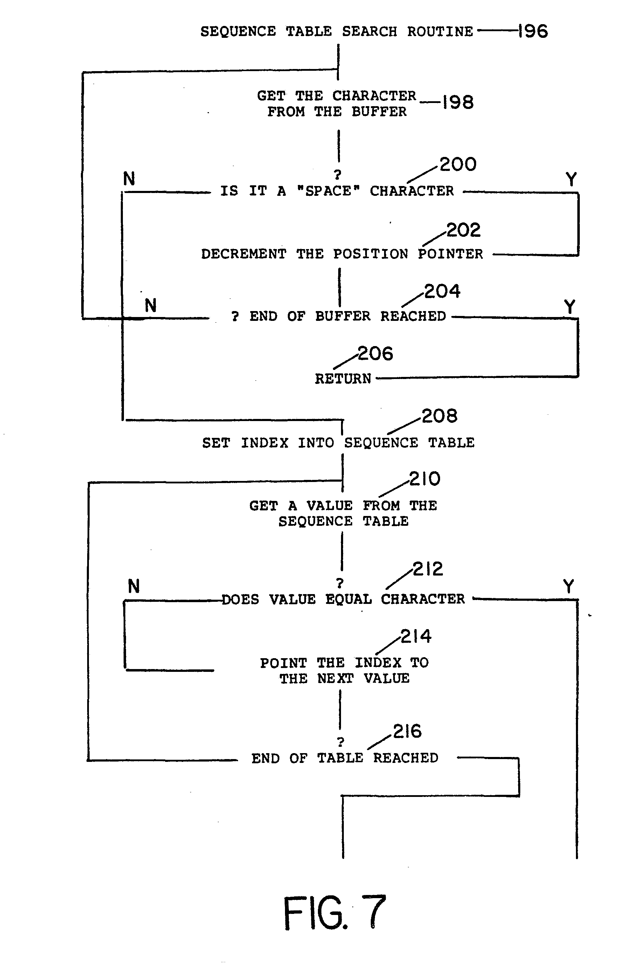

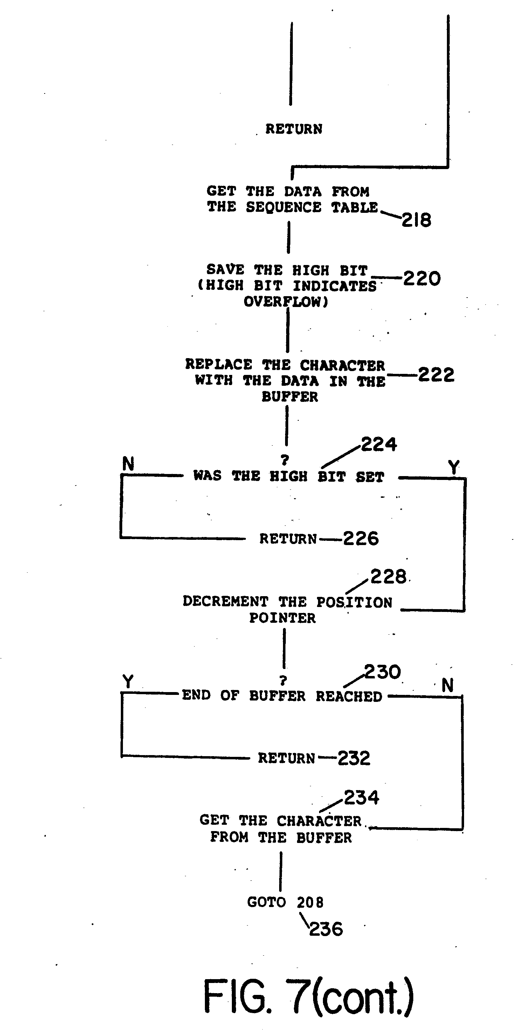

YES AUTO-SEQUENCING SELECTION.  If the answer is negative, the program advances to step 142, -RETURN-.  On positive answer, step 144 is practiced, namely, -SET POSITION POINTER TO CHARACTER 16-.  Departure is now made to the subroutine of Fig. 7, covered below, to modify a character (single column marker) or plural characters (multiple column marker) of the character buffer for automated seqentially numbered markers, i. e., through step 146, -GOTO SEQUENCE TABLE SEARCH-.  Upon completion of this search, which sequences the sixteenth character in the buffer to its next value, practice advances to step 148, -GET THE NUMBER OF COLUMNS SELECTED-, and then to step 150,

-? IS IT A ONE COLUMN MARKER-.  If the answer is positive, the program advances to step 152, -TRANSFER BUFFER CONTENT TO LCD DISPLAY-.  In this step, the marker print characters are displayed and printed on a wire marker.  The system
then effects a RETURN in step 154.

If the reply to the step 150 inquiry was negative,
practice proceeds to step 156, -? IS IT A TWO COLUMN
MARKER-.  If this inquiry is affirmatively answered, the
program proceeds to step 158, -? IS POSITION POINTER
LESS THAN 8-. It will be recalled that the sixteenth
character was above advanced in sequence by the setting of
the position pointer to such character.  Accordingly, the
reply to this inquiry will be in the negative, and practice
proceeds to step 160, -SET POSITION POINTER TO CHARACTER
7-.  This step leads to the sequencing of the seventh
buffer character in step 162, -GOTO SEQUENCE TABLE SEARCH-.
Step 164, -GOTO STEP 152-, is practiced, either following
step 162, or directly upon affirmative answer to the
inquiry of step 158.

If the answer to the step 156 inquiry was negative, i.
e., the stored marker column was more than two columns, the
program proceeds at that point directly to step 164, -? IS
IT A THREE COLUMN MARKER-.  If the answer here is
affirmative, advance is made to the inquiry of step 166, -?
IS POSITION POINTER LESS THAN 11-.  With the pointer at
character sixteen, the answer is negative and step 168 is
practiced, -SET POSITION POINTER TO CHARACTER 10-.
Sequence information is obtained for the tenth character in the buffer in step 170, -GOTO SEQUENCE TABLE SEARCH-.

Inquiry is now made in step 172, -? IS POSITION POINTER LESS THAN 5-. In the practice under discussion, the answer is negative and the program proceeds to step 174, -SET POSITION POINTER TO CHARACTER 4-. Sequence information is obtained for the fourth character in the buffer in step 176, -GOTO SEQUENCE TABLE SEARCH-.

If the response to the inquiry in step 164 was negative, i. e., a four column marker is to be printed, the program steps from step 164 to step 178, -? IS POSITION POINTER LESS THAN 13-. With the pointer at character sixteen, the answer is negative and advance is made to step 180, -SET POSITION POINTER TO CHARACTER 12-. Sequence information is now obtained for the twelfth character in step 182, -GOTO SEQUENCE TABLE SEARCH-. Inquiry is next made in step 184, -? IS POSITION POINTER LESS THAN 8-.

With negative reply, twelve being greater than eight, advance is made to step 186, -SET POSITION POINTER TO CHARACTER 7-. Sequence information for the seventh character is obtained in step 188, -GOTO SEQUENCE TABLE SEARCH-.

Inquiry is next made in step 190, -? IS POSITION POINTER LESS THAN 4-. With negative reply, eight being greater than four, advance is made to step 192, -SET POSITION POINTER TO CHARACTER 3-. Sequence information for the seventh character is obtained in step 194, -GOTO SEQUENCE TABLE SEARCH-.  The returns to step 152 for display and printing will be seen to occur following steps 162, 176 and 194, respectively for two, three and four column markers.

The sequencing phase of operation flows from an offset relation between buffer character values and assigned sequence data, such as is shown below in Table 2.

TABLE 2

| VALUE | DATA |
|-------|------|
| 0 | 1 |
| 1 | 2 |
| 2 | 3 |
| 3 | 4 |
| 4 | 5 |
| 5 | 6 |
| 6 | 7 |
| 7 | 8 |
| 8 | 9 |
| 9 | 0 |

The DATA 0 bit is set high to indicate overflow.

The sequence phase is entered in step 196, -SEQUENCE TABLE SEARCH ROUTINE-, of Fig. 7.  The outset step consults the character buffer for a character to be sequenced, per the above positioning of the position pointer- step 198, -GET THE CHARACTER FROM THE BUFFER-. Inquiry is made as to whether the character is an information entry or not in step 200, -? IS IT A "SPACE" CHARACTER-. If affirmative, the position pointer is decremented in step 202, -DECREMENT THE POSITION POINTER-. Inquiry is now made as to whether there are no more characters in the buffer in step 204, -? END OF BUFFER REACHED-. If yes, a RETURN is made in step 206. Otherwise, another character is obtained.

If a negative reply applies as to the step 200 inquiry, practice advances to step 208 for indexing the sequence table (Table 2 above), -SET INDEX INTO SEQUENCE TABLE-. A value from the sequence table is obtained from the index setting in step 210, -GET A VALUE FROM THE SEQUENCE TABLE-. Inquiry is made as to whether there is a match between the character and the value in step 212, -? DOES VALUE EQUAL CHARACTER-. If no, step 214 advances the sequence table index, -POINT THE INDEX TO THE NEXT VALUE-. Inquiry is made in step 216, -? END OF TABLE REACHED-. If no, another value is obtained. If yes, a RETURN is made.

Where an affirmative answer is provided in step 212, practice advances to step 218, -GET THE DATA FROM THE SEQUENCE TABLE-, and then to step 220, -SAVE THE HIGH BIT (HIGH BIT INDICATES OVERFLOW)-. Next, a substitution is made, i. e., of the sequentially higher DATA thus obtained, for the character value, this in step 222, -REPLACE THE
CHARACTER WITH THE DATA IN THE BUFFER-.

In the event that the high bit was set, which occurs
when the value under consideration is nine, need is had to
set that value to zero and to increment the immediately
leftward character in the buffer, for example where the
value is nine and the leftward character is one, the result
of sequencing need lead to these characters becoming
respectively two and zero.  Inquiry as to whether the high
bit was set is made in step 224, -? WAS THE HIGH BIT SET-.
If no, a RETURN is made in step 226.  If yes, practice
proceeds to step 228, -DECREMENT THE POSITION POINTER-.
Inquiry is now made in step 230, -? END OF BUFFER REACHED-.
If yes, a RETURN is made in step 232.  If no, the leftward
buffer character is obtained in step 234, -GET THE
CHARACTER FROM THE BUFFER-, and the program steps back, in
step 236, -GOTO 208-, to step 208 for the incrementing of
the obtained character.

From the foregoing, it will be seen that the invention
provides apparatus and system readily operator-settable for
subsequent, operator-unattended production of any desired
number of markers in any one of numerous configurations.
Various changes in programming practice and modifications
to apparatus and system may be introduced without departing
from the invention.  Thus, the particularly preferred embodiments and practices are intended in an illustrative
and not in a limiting sense. The true scope of the
invention is set forth in the appended claims.

0194537

CLAIMS:

1. Apparatus for producing wire markers, comprising:

    (a) a portable console unit supporting in viewing relation to an operator,

    (1) keyboard means for the input of an operator print command and information indicative of alphanumeric content, format and selective permutation characteristics of wire markers to be produced,

    (2) display means for presentation to an operator of such input operator information and apparatus requests for information;

    (3) printer means for the printing of wire markers with such alphanumeric content in such format and with said selected permutation characteristics; and

    (b) controller means connected to said keyboard means, said display means and said printer means for generating said apparatus requests for information and effecting operator-unattended printing of plural diverse wire markers responsively to said operator print command and input operator information.

2. Apparatus for producing wire markers, comprising:

    (a) keyboard means for the input of an operator print command and information indicative of alphanumeric content, format and selective permutation characteristics of wire markers to be produced;

    (b) display means for presentation to an operator of such input operator information;

    (c) printer means for the printing of wire markers with such alphanumeric content in such format and with said selected permutation characteristics; and

    (d) controller means connected to said keyboard means, said display means and said printer means for effecting operator-unattended printing of plural diverse wire markers responsively to said operator print command and input operator information, one of said operator input information comprising an input for the provision of such markers with selected numbers of columns and selective

0194537

T&B 963

column spacing in accordance with such number of column selection.

3. The invention claimed in claim 2 wherein one of said input operator information is an input for the sequencing of alphanumeric content of successively produced such wire markers, said controller means including sequencing signal generating means for generating output signals to said printer means for effecting operator-unattended printing of plural diverse wire markers having alphanumeric content in sequence.

4. The invention claimed in claim 2 wherein one of said input operator information is an input calling for the printing of said markers with a selective number of printed lines per marker, said controller means including printed line signal generating means for generating output signals to said printer means for effecting operator-unattended printing of plural wire markers with said selective number of printed lines per marker content.

5. The invention claimed in claim 2 wherein one of said input operator information is an input calling for the printing of said markers with a selective number of unprinted lines per marker, said controller means including unprinted lines signal generating means for generating output signals to said printer means for effecting operator-unattended printing of plural wire markers with said selective number of unprinted lines per marker content.

6. The invention claimed in claim 2 wherein one of said input operator information is an input calling for the printing of said markers in selective quantity, said controller means including quantity signal generating means for generating output signals to said printer means for effecting operator-unattended printing of plural wire markers in said selective quantity.

0194537

7. The invention claimed in claim 2 wherein one of said input operator information is an input calling for the printing of said markers with two columns, said controller means including two column signal generating means for generating output signals to said printer means for effecting operator-unattended printing of plural wire markers with said two column content with plural spaces between the two columns of such printed markers.

8. The invention claimed in claim 2 wherein one of said input operator information is an input calling for the printing of said markers with three columns, said controller means including three column signal generating means for generating output signals to said printer means for effecting operator-unattended printing of plural wire markers with said three column content with plural spaces between the first and second columns and between the second and third columns of such printed markers.

9. The invention claimed in claim 2 wherein one of said input operator information is an input calling for the printing of said markers with four columns, said controller means including four column signal generating means for generating output signals to said printer means for effecting operator-unattended printing of plural wire markers with said four column content with single spacing between the first and second and between the third and fourth of such columns and with plural spaces between the second and third columns of such printed markers.

10. In a method for the production of wire markers, the steps of:

(a) displaying, to an operator, selection inquiries as to diverse permutation characteristics of wire markers and the quantity of wire markers to be produced, one of said selection inquiries being for the provision of such markers with selected numbers of columns and selective column spacing in accordance with such number of column selection;

(b) storing the responses of such operator to said selection inquiries; and

(c) producing wire markers with such operator-selected permutations and in such operator-selected quantity responsively to single instance operator demand for production thereof, responsively to such stored responses.

FIG. I

FIG. 2

0194537

/38
START

/40
PAPER ADVANCE

/42
FORMAT PHASE

NO —— ? /44 —— YES
AUTO-SEQUENCING

/46
STORE AUTO-SEQUENCING YES

N —— ? /48 —— Y
NUMBER OF COLUMNS

/50
STORE COLUMNS SELECTION

N —— ? /52 —— Y
NUMBER OF PRINTED LINES
PER MARKER

/54
STORE NUMBER OF PRINTED
LINES SELECTION

N —— ? /55 —— Y
NUMBER OF UNPRINTED LINES
PER MARKER

/56
STORE NUMBER OF UNPRINTED
LINES SELECTION

FIG. 3

? ___—57
N ___ QUANTITY OF MARKERS ___ Y
TO BE PRINTED

___—58

STORE QUANTITY SELECTION

___—60

GOTO KEYBOARD CONSULT AND
BUFFER SPACE ENTRY ROUTINE

FIG. 3(cont.)

```
                        /62
            KEYBOARD CONSULT AND
             BUFFER SPACE ENTRY

                        /64
              GET KEY SIGNAL

                    ?   /66
    N  ─────────── PROGRAM KEY ─────────── Y
    │                                      │
    │                   /68                │
    │          GOTO FORMAT PHASE ──────────┘
    │
    │               ?   /70
    N  ─────────── ONE COLUMN ──────────── Y
    │                                      │
    │                   /72                │
    └───── GOTO ? TWO COLUMNS              │
                                           │
                        /74                │
          ENTER SIGNAL INTO BUFFER ────────┘

                    ?   /76
    N  ─────────── BUFFER FULL ──────────── Y
    │                                       │
    │                   /78                 │
    └───── GOTO GET KEY SIGNAL              │
                                            │
                        /80                 │
          AWAIT PRINT KEY SIGNAL ───────────┘

                    ?   /82
    N  ─────────── TWO COLUMNS ──────────── Y
    │                                       │
```

FIG. 4

GOTO ? THREE COLUMNS ─── 84

MUST ENTER TWO SPACES
IN BUFFER FOLLOWING
SEVENTH BUFFER ENTRY ─── 86

ENTER SIGNAL/SPACE
INTO BUFFER ─── 88

N ────── ? ── 90
BUFFER FULL ────── Y

GOTO GET KEY SIGNAL ─── 94

AWAIT PRINT KEY SIGNAL ─── 96

N ────── ? ── 98
THREE COLUMNS ────── Y

GOTO ? FOUR COLUMNS ─── 100

MUST ENTER TWO SPACES
AFTER FOURTH AND
TENTH BUFFER ENTRIES ─── 102

ENTER SIGNAL/SPACE
INTO BUFFER ─── 104

N ────── ? ── 106
BUFFER FULL ────── Y

FIG. 4(cont.)

```
          ___ 108
      ┌─ GOTO GET KEY SIGNAL
      │
      │                        ___ 110
      └── AWAIT PRINT KEY SIGNAL ──────┐
                                        │
                    ?  ___ 112          │
   N ────────── FOUR COLUMNS ────── Y   │
   │                                │   │
   │            ___ 113             │   │
   └────────── GOTO STEP 62         │   │
                                    │   │
                        ___ 114     │   │
                MUST ENTER ONE SPACE │  │
              AFTER THIRD AND TWELFTH│  │
              BUFFER ENTRIES AND TWO ─┘ │
               SPACES AFTER SEVENTH     │
                  BUFFER ENTRY          │
                                        │
                         ___ 116        │
                 ENTER SIGNAL/SPACE     │
                   INTO BUFFER          │
                                        │
                    ?  ___ 118          │
   N ────────── BUFFER FULL ────── Y    │
   │                            │       │
   │             ___ 122        │       │
   └───── GOTO GET KEY SIGNAL   │       │
                                │       │
                     ___ 124    │       │
          AWAIT PRINT KEY SIGNAL ───────┘
```

# FIG. 4(cont.)

FIG. 5

PRINT ROUTINE
(PRINT SPECIFIED NUMBER OF
PRINTED AND UNPRINTED
LINES PER MARKER)                    ─126

N ─── DONE PRINTING MARKER    ─128
                ?

              Y

GOTO AUTO-SEQUENCE ROUTINE    ─130

              ?          ─132
N    IS MARKER PRINT _____ Y
     QUANTITY MET

       ─── DECREMENT MARKER QUANTITY    ─134

GOTO KEYBOARD ROUTINE ─    ─136

138

AUTO-SEQUENCE ROUTINE

140

N ———— YES AUTO-SEQUENCING SELECTION ———— Y

142

RETURN

144

SET POSITION POINTER
TO CHARACTER 16

146

GOTO SEQUENCE TABLE SEARCH

148

GET THE NUMBER OF
COLUMNS SELECTED

150

N ———— IS IT A ONE
COLUMN MARKER ———— Y

152

TRANSFER BUFFER CONTENT
TO LCD DISPLAY

154

RETURN

156

N ———— IS IT A TWO
COLUMN MARKER ———— Y

FIG. 6

**158** IS POSITION POINTER
LESS THAN 8

**160** SET POSITION POINTER
TO CHARACTER 7

**162** GOTO SEQUENCE TABLE SEARCH

GOTO 152

N **164** IS IT A THREE
COLUMN MARKER Y

N **166** IS POSITION POINTER
LESS THAN 11 Y

**168** SET POSITION POINTER
TO CHARACTER 10

**170** GOTO SEQUENCE TABLE SEARCH

N **172** IS POSITION POINTER
LESS THAN 5 Y

**174** SET POSITION POINTER
TO CHARACTER 4

**176** GOTO SEQUENCE TABLE SEARCH

FIG. 6(cont.)

GOTO 152

IS POSITION POINTER 178
LESS THAN 13

N                                                              Y

SET POSITION POINTER 180
TO CHARACTER 12

GOTO SEQUENCE TABLE SEARCH 182

IS POSITION POINTER 184
LESS THAN 8

N                                                              Y

SET POSITION POINTER 186
TO CHARACTER 7

GOTO SEQUENCE TABLE SEARCH 188

IS POSITION POINTER 190
LESS THAN 4

N                                                              Y

SET POSITION POINTER 192
TO CHARACTER 3

GOTO SEQUENCE TABLE SEARCH 194

GOTO 152

FIG. 6(cont.)

SEQUENCE TABLE SEARCH ROUTINE ——196

GET THE CHARACTER —198
FROM THE BUFFER

N         ?     ⁄200       Y
IS IT A "SPACE" CHARACTER

⁄202
DECREMENT THE POSITION POINTER

N       ⁄204       Y
? END OF BUFFER REACHED

⁄206
RETURN

⁄208
SET INDEX INTO SEQUENCE TABLE

⁄210
GET A VALUE FROM THE
SEQUENCE TABLE

N       ?     ⁄212       Y
DOES VALUE EQUAL CHARACTER

⁄214
POINT THE INDEX TO
THE NEXT VALUE

?     ⁄216
END OF TABLE REACHED

# FIG. 7

0194537

RETURN

GET THE DATA FROM
THE SEQUENCE TABLE — 218

SAVE THE HIGH BIT
(HIGH BIT INDICATES — 220
OVERFLOW)

REPLACE THE CHARACTER
WITH THE DATA IN THE — 222
BUFFER

N ◄——— WAS THE HIGH BIT SET ——— Y   224

RETURN — 226

228
DECREMENT THE POSITION
POINTER

Y ◄——— END OF BUFFER REACHED ——— N   230

RETURN — 232

234
GET THE CHARACTER
FROM THE BUFFER

GOTO 208
236

FIG. 7(cont.)